# EUROPÄISCHE PATENTSCHRIFT

(11) **EP 2 992 378 B1**
(45) Veröffentlichungstag und Bekanntmachung des Hinweises auf die Patenterteilung: **17.05.2017**
(21) Anmeldenummer: 14724292.9
(22) Anmeldetag: 14.04.2014
(51) Int. Cl.: G02B 26/08, G02B 26/10, H02K 26/00, H02K 33/16, H02K 1/17

(54) **SCANNERVORRICHTUNG**
SCANNER DEVICE
DISPOSITIF SCANNER

(30) Priorität: 30.04.2013 DE 102013104410
(43) Veröffentlichungstag der Anmeldung: 09.03.2016
(73) Patentinhaber: Scansonic MI GmbH, 12681 Berlin (DE)
(72) Erfinder: WALTER, Steffen, 13129 Berlin (DE); LANGE, André, 10245 Berlin (DE)
(74) Vertreter: Kaufmann, Sigfrid
(86) Internationale Anmeldenummer: PCT/DE2014/100128
(87) Internationale Veröffentlichungsnummer: WO 2014/177133

(56) Entgegenhaltungen:
- EP-A2- 2 157 467
- US-A- 4 302 720
- US-A- 5 243 241
- US-A1- 2010 142 018
- US-A1- 2012 105 930
- US-A1- 2012 193 428

## Beschreibung

Die Erfindung betrifft eine Scannervorrichtung zum angetriebenen Positionieren eines Umlenkspiegels, z.B. zur Verwendung zum Positionieren eines Laserstrahls bei der Lasermaterialbearbeitung.

Scannervorrichtungen bzw. optische Scanner werden eingesetzt, um Lichtstrahlen durch Umlenkung zu positionieren und z.B. Muster zu modulieren. Ein optischer Scanner kann zum Umpositionieren des Umlenkspiegels z.B. einen Drehspulen-, Drehmagnet- oder Dreheisenantrieb aufweisen, wobei der Spiegel an einer Welle befestigt ist und die Welle und somit auch der Spiegel mittels des jeweiligen Antriebs angetrieben drehbar ist. Es kann z.B. vorgesehen sein, den Rotationswinkel des Spiegels mittels einer Rückkopplung über einen Winkelgeber, der z.B. direkt an die Welle des Antriebs gekoppelt ist, und eine entsprechende Regelelektronik einzustellen und stabil zu halten.

Drehspulenantriebe haben aufgrund des geringen Gewichts der Spule ein kleineres Trägheitsmoment als Drehmagnetantriebe gleicher Drehmomentkonstante. Da die Spule jedoch von Luft umgeben ist, erfolgt eine schlechte Wärmeabfuhr von der Spule an die Umgebung, sodass lediglich eine geringe Dauerkraft erzeugt werden kann. Zudem ist die Leistungszufuhr verschleißbehaftet und geht mit parasitären mechanischen Verlusten einher. Bei Drehmagnetantrieben kann die Spule in Kontakt zu einem Eisenrückschluss stehen, sodass die von der Spule erzeugte Wärme über den Eisenrückschluss an die Umgebung abgegeben werden kann; jedoch steigt mit dem erzeugbaren Drehmoment auch die zu bewegende Magnetmasse. Dreheisenantriebe wiederum nutzen als Rotor ein drehbar angeordnetes Weicheisenelement, wobei die Drehbewegung des Weicheisenelements mit einer Änderung des Widerstandes eines magnetischen Kreises einhergeht, der z.B. mittels einer Spule mit einem Eisenkern erzeugt werden kann.

Die US 5,225,770 A beschreibt als Beispiel einen optischen Scanner mit einem Drehmagnetantrieb; wobei mittels ortsfester, in einen Weicheisenrückschluss eingebrachter Spulen Kräfte auf einen permanentmagnetischen Rotor ausgeübt werden, wobei an einem Ende des Rotors ein Spiegel befestigt ist und an dem anderen Ende des Rotors ein Positionsdetektor angeordnet ist.Eine Scannervorrichtung konventioneller Bauart ist auch in Dokument US 5 243 241 offenbart. Bei der Materialbearbeitung mittels eines Laserstrahls werden aufgrund der verwendeten kleinen Strahldurchmesser und der geforderten kurzen Verweildauern des Strahls hohe Anforderungen an die Positioniergenauigkeit und an die Positioniergeschwindigkeit des Spiegels gestellt, d.h. es wird ein schnelles und positionsgenaues Umpositionieren des Umlenkspiegels von einer Drehwinkelposition zu einer anderen Drehwinkelposition gefordert. Ein schnelles Umpositionieren und eine hohe Positioniergenauigkeit erfordern ein (im Vergleich zum Antriebsmoment) kleines Trägheitsmoment und eine steife Verbindung zwischen dem Antrieb und dem Spiegel; wobei bei optischen Scannern mit einer mittels eines Antriebs angetriebenen Welle, an der ein Spiegel befestigt ist, das Trägheitsmoment des von den dem Antrieb zu bewegenden Systems durch die Welle und den Spiegel gegeben ist und die Verbindungssteifheit durch die Torsion der drehmomentübertragenden Welle begrenzt ist.

Durch die Erfindung wird eine Scannervorrichtung mit einem Spiegel bereitgestellt, mittels derer ein schnelles und positionsgenaues Umpositionieren des Spiegels ermöglicht ist, und die mit einer flachen bzw. kompakten und somit wenig störenden Kontur ausgeführt werden kann.

Gemäß der Erfindung wird eine Scannervorrichtung bzw. ein optischer Scanner bereitgestellt. Die Scannervorrichtung weist (mindestens) einen Spiegel auf, der derart angeordnet und gelagert ist, dass er um eine Rotationsachse bzw. Schwenkachse herum schwenkbar ist. Die Scannervorrichtung weist zudem (mindestens) ein Element aus einem weichmagnetischen Material (im Folgenden auch als "Ankerelement" oder "Anker" bezeichnet) auf, das in einem radialen Abstand zu der Rotationsachse an dem Spiegel befestigt ist, sodass es bei einer Drehung bzw. Schwenkbewegung des Spiegels mit demselben mitdreht und entlang eines Kreisbahnabschnitts bewegt wird. Ein solcher Anker z.B. quaderförmig ausgeführt und entweder unmittelbar kontaktierend an dem Spiegel angeordnet oder mittels eines dafür vorgesehenen Zwischenelements mittelbar an dem Spiegel befestigt.

Die Scannervorrichtung weist ferner (mindestens) einen Eisenkern mit einem Luftspalt auf, wobei der Eisenkern entweder einteilig oder auch mehrteilig ausgeführt sein kann. Der Eisenkern kann z.B. aus einem weichmagnetischen Material bestehen, z.B. aus Weicheisen oder Siliziumeisen. Die Scannervorrichtung weist zudem (mindestens) eine Spule auf, die um einen Abschnitt des Eisenkerns (im Folgenden auch als "Spulenkernabschnitt" bezeichnet") herum verlaufend angeordnet ist. Die Spule kann z.B. aus isoliertem Kupfer bestehen. Die Spule ist, z.B. mittels einer dafür vorgesehenen Steuervorrichtung, mit einem elektrischen Strom beaufschlagbar, wobei mittels des Stromflusses ein Magnetfeld (im Folgenden auch als "Spulen-Magnetfeld" bezeichnet) in der Spule, dem Eisenkern und dem Luftspalt hervorgerufen wird. Der magnetische Fluss dieses Magnetfeldes wird von dem Eisenkern unter Erhöhung der magnetischen Flussdichte gebündelt und geführt.

Bei Beaufschlagen der Spule mit einem elektrischen Strom wird in dem Eisenkern und in dem Luftspalt ein Magnetfeld hervorgerufen, wobei die Ausrichtung dieses Magnetfeldes von der Stromrichtung in der Spule abhängt. Bei Beaufschlagen der Spule mit einem Strom mit einer ersten Stromrichtung (z.B. durch Beaufschlagen der Spule mit einer elektrischen Spannung einer ersten Polarität) wird in dem Luftspalt ein Magnetfeld mit einer ersten Spulenfeld-Richtung hervorgerufen. Analog wird bei Beaufschlagen der Spule mit einem Strom mit einer zweiten Stromrichtung, die der ersten Stromrichtung entgegengerichtet ist, (z.B. durch Beaufschlagen der Spule mit einer elektrischen Spannung einer zweiten, gegenüber der ersten Polarität umgekehrten Polarität) in dem Luftspalt ein Magnetfeld mit einer zweiten Spulenfeld-Richtung hervorgerufen, wobei die zweite Spulenfeld-Richtung zu der ersten Spulenfeld-Richtung entgegengerichtet ist bzw. antiparallel verläuft. Im Folgenden wird mit der ersten bzw. zweiten Spulenfeld-Richtung stets die Richtung des Magnetfeldes bezeichnet, das von der Spule in dem Luftspalt (und z.B. nicht in dem Eisenkern) hervorgerufen wird, wenn die Spule mit einem Strom der ersten bzw. zweiten Stromrichtung beaufschlagt wird.

Die Scannervorrichtung weist (mindestens) ein Paar von Permanentmagneten mit einem ersten und einem zweiten Permanentmagneten bzw. Magneten auf. Der erste Magnet weist eine in einer ersten Magnetisierungsrichtung verlaufende Magnetisierung auf, der zweite Magnet weist eine in einer zweiten Magnetisierungsrichtung verlaufende Magnetisierung auf. Die Magneten bestehen vorzugsweise aus Werkstoffen mit einer hohen Energiedichte, z.B. aus NdFeB.

Der erste und der zweite Magnet sind derart in dem Luftspalt des Eisenkerns angeordnet, dass die Magnetisierung des ersten Magneten einen in Richtung der ersten Spulenfeld-Richtung weisenden Anteil aufweist und die Magnetisierung des zweiten Magneten einen in Richtung der zweiten Spulenfeld-Richtung weisenden Anteil aufweist. Dabei kann die Magnetisierung des ersten und zweiten Magneten vektoriell zerlegt werden in einen Anteil (sog. Parallelanteil), der parallel zu dem von der Spule in dem Luftspalt erzeugten Magnetfeld verläuft, und einen Anteil (sog. Senkrechtanteil), der senkrecht dazu verläuft. Der erste Magnet ist so angeordnet, dass der Parallelanteil seiner Magnetisierung in Richtung der ersten Spulenfeld-Richtung weist, und der zweite Magnet ist derart angeordnet, dass der Parallelanteil seiner Magnetisierung in Richtung der zweiten Spulenfeld-Richtung weist.

Es kann z.B. vorgesehen sein, den ersten Magneten derart anzuordnen, dass seine Magnetisierung (im Wesentlichen oder vollständig) in die erste Spulenfeld-Richtung weist, und/oder den zweiten Magneten derart anzuordnen, dass seine Magnetisierung (im Wesentlichen oder vollständig) in die zweite Spulenfeld-Richtung weist. Zudem kann vorgesehen sein, den ersten und den zweiten Magneten derart auszubilden und anzuordnen, dass die Magnetisierung des ersten Magneten den gleichen Betrag aufweist wie die Magnetisierung des zweiten Magneten und/oder die Magnetisierung des ersten Magneten der Magnetisierung des zweiten Magneten entgegengerichtet ist (d.h. die erste und die zweite Magnetisierungsrichtung antiparallel zueinander verlaufen).

Der Anker ist in einem radialen Abstand zu der Rotationsachse an dem Spiegel befestigt, sodass bei einer Drehung des Spiegels der Anker entlang eines Kreisbahnabschnitts bewegt wird. Zudem ist der Eisenkern derart ausgebildet und angeordnet, dass der von dem Anker überstrichene Kreisbahnabschnitt innerhalb des von dem Eisenkern gebildeten Luftspalts verläuft und der Anker somit bei einer Drehung des Spiegels innerhalb des Luftspalts bewegt wird.

Der erste und der zweite Magnet sind innerhalb des Luftspalts derart angeordnet, dass der erste Magnet an einer ersten Drehwinkelposition bezüglich der Rotationsachse und der zweite Magnet an einer zweiten Drehwinkelposition bezüglich der Rotationsachse in dem Spalt angeordnet ist, wobei z.B. der erste und/oder der zweite Magnet im Kontakt zu dem Eisenkern angeordnet sein können.

Wird die Spule mit einem Strom beaufschlagt, so wird in dem Luftspalt das von der Spule erzeugte Magnetfeld mit dem von den Permanentmagneten erzeugten Magnetfeldern überlagert. Insbesondere erfolgt bei Beaufschlagung der Spule mit einem Strom der ersten Stromrichtung in dem Luftspalt eine Verstärkung des an dem ersten Magneten vorliegenden Magnetfelds und eine Abschwächung des an dem zweiten Magneten vorliegenden Magnetfelds, wodurch der weichmagnetische Anker aufgrund der resultierenden Reluktanzkraft unter Drehung des Spiegels zu dem an der ersten Drehwinkelposition angeordneten ersten Magneten hin bewegt wird. Analog erfolgt bei Beaufschlagung der Spule mit einem Strom der zweiten Stromrichtung in dem Luftspalt eine Abschwächung des an dem ersten Magneten vorliegenden Magnetfelds und eine Verstärkung des an dem zweiten Magneten vorliegenden Magnetfelds, wodurch der Anker unter Drehung des Spiegels zu dem an der zweiten Drehwinkelposition angeordneten zweiten Magneten hin bewegt wird. Mittels Einstellung des Betrages und der Richtung des Spulenstroms kann somit der Spiegel zu einer Drehbewegung angetrieben und umpositioniert werden.

Erfindungsgemäß erfolgt der Schwenkantrieb des Spiegels mittels der Kraftwirkung auf den oder die Anker, wobei die Übertragung des Drehmoments auf den Spiegel nicht via eine Welle erfolgt und der Antrieb wellenlos gehalten sein kann. Dadurch wird die Positioniergenauigkeit des Spiegels nicht durch die Torsion einer drehmomentübertragenden Welle vermindert, sodass mittels der Scannervorrichtung ein Positionieren des Spiegels mit einer hohen Positioniergenauigkeit ermöglicht ist. Zudem ist der erfindungsgemäße Schwenkantrieb ohne die bei herkömmlichen Reluktanzantrieben erforderlichen Klauen am Rotor gestaltet. Stattdessen sind die flussleitenden Anteile des Rotors mittels des Segmentierungsluftspalts abgetrennt und dem Polschuh-Abschnitt des Eisenkerns zugeordnet.

Zudem können die mit dem Spiegel mitdrehenden Teile des Schwenkantriebs, nämlich die Anker, klein gehalten und daher mit einer geringen Masse ausgebildet sein, sodass das Trägheitsmoment des von dem Antrieb in Drehung zu versetzenden Systems gering gehalten werden kann, wodurch mittels der Scannervorrichtung ein schnelles, trägheitsarmes Umpositionieren des Spiegels ermöglicht ist. Zudem kann die Scannervorrichtung, da keine entlang der Rotationsachse verlaufende Welle zur Drehmomentübertragung erforderlich ist, mit einer entlang der Rotationsachse schmalen Kontur kompakt ausgebildet werden. Mittels der Konzentration des magnetischen Flusses infolge der hohen Permeabilität des verwendeten weichmagnetischen Materials, der Reduzierung parasitärer Massen und der Anordnung des kraftangreifenden Elements am Spiegel ist ein gutes Verhältnis zwischen Drehmoment und Trägheitsmoment erzielbar.

Bei herkömmlichen Scannern haben demgegenüber die mitbewegten bzw. mitdrehenden Teile des Antriebs (z.B. die drehmomentübertragende Welle) eine große Masse, da sie z.B. selbst aus Permanentmagneten bestehen, und/oder das Drehmoment zum Drehen des Spiegels wird mittels eines zum Antrieb gehörenden Hebels erzeugt, der an einer Lagerung oder an einem zweiten Anker abgestützt ist. Durch diese funktionelle und örtliche Trennung von Antrieb und Spiegel resultiert eine hohe Trägheit der zu bewegenden Massen.

Der Luftspalt ist zwischen einem ersten und einem zweiten Endabschnitt des Eisenkerns ausgebildet, wobei insbesondere vorgesehen sein kann, die Magnete und den Anker derart innerhalb des Luftspalts anzuordnen, dass die Magnete kontaktierend an dem ersten Eisenkern-Endabschnitt angeordnet sind und der Anker zwischen den Magneten und dem zweiten Eisenkern-Endabschnitt angeordnet ist, sodass in dem Luftspalt ein zwischen dem ersten Magneten und dem Anker angeordneter Teilspalt (auch als erster "Arbeitsluftspalt" bezeichnet), ein zwischen dem zweiten Magneten und dem Anker angeordneter Teilspalt (auch als zweiter "Arbeitsluftspalt" bezeichnet), und ein zwischen dem Anker und dem ankerseitigen zweiten Eisenkern-Endabschnitt angeordneter Teilspalt (im Folgenden auch als "Segmentierungsluftspalt" bezeichnet) ausgebildet sind. Der Segmentierungsluftspalt kann z.B. als Gleitlager ausgeführt sein.

Der Spulenkernabschnitt des Eisenkerns kann zwischen dem permanentmagnetseitigen ersten Endabschnitt und dem ankerseitigen zweiten Endabschnitt des Eisenkerns angeordnet sein, wobei diese drei Abschnitte entweder jeweils als separates Bauteil ausgebildet sein können oder zwei oder alle dieser Abschnitte integral als ein einziges Bauteil ausgebildet sein können. Der ankerseitige Eisenkern-Endabschnitt kann als Polschuh zum Führen der Magnetfeldlinien ausgebildet sein, der permanentmagnetseitige Eisenkern-Endabschnitt dient als magnetischer Rückschluss.

Zum Erzielen einer besseren Kraftwirkung kann die bezüglich der Bewegungsbahn des Ankers tangential verlaufende Abmessung des Ankers größer sein als der Abstand zwischen dem ersten und dem zweiten Magneten entlang dieser Richtung. Zudem kann vorgesehen sein, den ankerseitigen zweiten Eisenkern-Endabschnitt als Polschuh mit einem konstanten Radius derart auszuführen, dass bei einer Drehbewegung des Spiegels der Abstand zwischen dem zweiten Eisenkern-Endabschnitt und dem Anker konstant bleibt. Durch den Segmentierungsluftspalt entlang der Flussrichtung des von der Spule erzeugten Magnetfeldes ist der Anker bevorzugt nur so lang ausgebildet, dass kein signifikanter magnetischer Nebenschluss zwischen den Magneten und dem Spulenkern parallel zu den Arbeitsluftspalten entsteht.

Wenn kein Stromfluss in der Spule vorliegt und der Anker z.B. einen Auslenkwinkel von 0 Grad aufweist (d.h. mittig bezüglich der beiden Magnete positioniert ist), bildet sich ein kurzer magnetischer Kreis (auch als "Vormagnetisierungskreis" bezeichnet) aus, der über den Anker und den von den Magneten kontaktierten ersten Eisenkern-Endabschnitt zwischen den beiden Magneten verläuft. Bei Stromfluss in der Spule superponiert in den Arbeitsluftspalten das durch die Spule erregte Magnetfeld mit den permanentmagnetisch erregten Magnetfeldern und ein Teil des magnetischen Flusses aus dem Vormagnetisierungskreis wird über den Anker durch den ankerseitigen zweiten Eisenkern-Endabschnitt umgelenkt. Die Differenz der in den beiden Arbeitsluftspalten vorliegenden magnetischen Flussdichten bewirkt über die resultierende Grenzflächenkraft ein Drehmoment auf den Anker. Bei Umkehrung der Stromrichtung kehrt sich auch die Richtung der Drehmomentwirkung um.

Die mittels der Bestromung der Spule erfolgende Kraftwirkung auf den Anker bildet sich an den Arbeitsluftspalten aus, wohingegen an dem Segmentierungsluftspalt - insbesondere bei Ausbildung des zweiten Endabschnitts als Polschuh mit konstantem Radius - keine bzw. lediglich eine geringe Drehmomentwirkung auf den Anker erfolgt. Die radiale Lage des Segmentierungsluftspalts beeinflusst jedoch das Verhältnis zwischen dem Drehmoment und dem Trägheitsmoment. Die bewegten Bestandteile des Antriebssystems beschränken sich auf die am Spiegel befestigten Anker, wobei der größte Anteil der flussleitenden Massen ortsfest ist und nicht mitbewegt wird. Durch die hohe erzielbare Flusskonzentration im Anker werden hohe Stellkräfte bei geringer durch den Antrieb verursachter Massenträgheit erreicht. Mittels der massesparenden Befestigung der Anker am Spiegel können parasitäre Trägheitsmomente gering gehalten werden.

Die Scannervorrichtung kann somit im Wesentlichen aus dem Antriebssystem, einem Spiegel, einer Halterung zum Halten des Spiegels, einem Lager zum Lagern des Spiegels und einem Positionsdetektor bestehen; wobei das Antriebssystem einen Stator bildende ortsfeste Bestandteile (den Eisenkern, die Spule und die Permanentmagneten) und bewegte Bestandteile (den oder die Anker) aufweist. Es kann vorgesehen sein, dass der Spiegel (samt Anker) und die Spiegelhalterung austauschbar gestaltet sind.

Der Positionsdetektor kann z.B. ein auf einem optischen, induktiven, kapazitiven oder magnetischen Funktionsprinzip beruhen und kann mittels Auswertung eines von ihm gelieferten Positionssignals über eine entsprechende Ansteuerung der Spule bzw. des Antriebssystems zur geregelten Einstellung des Spiegels verwendet werden. Die spiegelseitigen Bauteile des Positionsdetektors können z.B. an dem Spiegel oder an der Spiegelhalterung befestigt sein, bei berührungslos messenden Positionsdetektoren können diese auch direkt mit der Spiegelfläche wechselwirken.

Die Scannervorrichtung ist zum Ablenken von Lichtstrahlen (z.B. Laserstrahlen) vorgesehen, insbesondere für die Materialbearbeitung mittels Laserstrahls. Der Spiegel ist mittels einer Halterung an einem Lager gegenüber den ortsfesten Bestandteilen des Antriebssystems um die Rotationsachse schwenkbar gelagert.

Die erste und die zweite Spulenfeld-Richtung können (durch entsprechende Ausgestaltung und Anordnung des Eisenkerns) z.B. senkrecht zu der Rotationsachse, parallel zu der Rotationsachse, oder in einem beliebigen Winkel zu der Rotationsachse verlaufend angeordnet sein. Dementsprechend kann (durch entsprechende Anordnung der beiden Magnete) die Magnetisierung des ersten und des zweiten Magneten senkrecht zu der Rotationsachse, parallel zu der Rotationsachse, oder in einem Winkel zu der Rotationsachse verlaufen; wobei die Anordnung der Magnete und des Eisenkerns stets derart ist, dass die Magnetisierung des ersten Magneten einen in Richtung der ersten Spulenfeld-Richtung und die Magnetisierung des zweiten Magneten einen in Richtung der zweiten Spulenfeld-Richtung weisenden Anteil aufweist.

Gemäß einer Ausführungsform sind der erste und der zweite Permanentmagnet derart angeordnet, dass die Magnetisierung des ersten und des zweiten Magneten senkrecht (z.B. im Wesentlichen radial) zu der Rotationsachse verlaufen; wobei zudem vorgesehen sein kann, dass auch der Eisenkern derart ausgebildet ist, dass die erste und die zweite Spulenfeld-Richtung senkrecht (z.B. im Wesentlichen radial) zu der Rotationsachse verlaufen. Es kann jedoch auch gemäß dieser Ausführung vorgesehen sein, dass (durch entsprechende Ausgestaltung und Anordnung des Eisenkerns) die erste und die zweite Spulenfeld-Richtung in einem Winkel zu der Rotationsachse verlaufen. Gemäß dieser Ausführung können - entlang der Rotationsachse als Höhenrichtung gesehen - sowohl der Anker als auch der Eisenkern ober- und/oder unterhalb des Spiegels und somit außerhalb der Lichtwege des einfallenden und reflektierten Lichts angeordnet sein angeordnet sein, sodass z.B. ein Lichteinfall mit einem großen Einfalls- und Ausfallswinkel ermöglicht ist.

Gemäß einer weiteren Ausführungsform ist der Spiegel mit einer angefasten Form ausgeführt, d.h. mit einer oder mehreren abgeschrägten Ecken oder Kanten, wobei das Ankerelement an einer Fase des Spiegels angeordnet ist und z.B. mit einem dreieckigen Querschnitt ausgeführt sein kann. Indem der Anker an einer Fase des Spiegels angeordnet ist, kann der nicht von dem Licht- bzw. Laserstrahl beleuchtete Bereich noch effektiver als Antriebsbauraum ausgenutzt werden und die Störkontur in Richtung der Rotationsachse klein gehalten werden, sodass das Ausbilden der Scannervorrichtung mit einer kompakten Form zusätzlich unterstützt ist.

Gemäß einer weiteren Ausführung weist die Scannervorrichtung zwei (bevorzugt identische) Ankerelemente auf, die derart an dem Spiegel befestigt sind, dass sie bezüglich der Rotationsachse symmetrisch angeordnet sind. Zudem ist jedem der beiden Ankerelemente ein jeweiliges Paar von Permanentmagneten wie oben erläutert derart zugeordnet, dass das jeweilige Ankerelement mittels Bestromens einer Spule eine Kraftwirkung zu einem der beiden Magnete des Magnetpaares erfährt. Indem die Anker derart symmetrisch an dem Spiegel vorgesehen sind, kann eine symmetrische Krafteinwirkung realisiert werden, wodurch z.B. die radiale Lagerbelastung gesenkt und eine bessere Raumausnutzung ermöglicht werden kann. Es kann auch vorgesehen sein, eine beliebige Anzahl von Ankerelementen derart an dem Spiegel zu befestigen, dass sie bezüglich der Rotationsachse symmetrisch angeordnet sind. Zum Beispiel kann vorgesehen sein, dass die Scannervorrichtung mehrere Paare von Ankerelementen aufweist, wobei jedes der Paare zwei (bevorzugt identische) Ankerelemente aufweist, und wobei die beiden Ankerelemente eines jeden Paares derart an dem Spiegel befestigt sind, dass sie bezüglich der Rotationsachse symmetrisch angeordnet sind.

Alternativ oder zusätzlich kann die Scannervorrichtung zwei (bevorzugt identische) Ankerelemente aufweisen, die derart an dem Spiegel befestigt sind, dass sie bezüglich einer senkrecht zu der Rotationsachse verlaufenden Ebene spiegelsymmetrisch angeordnet sind; wobei z.B. jedem dieser beiden Ankerelemente ein jeweiliges Paar von Permanentmagneten wie oben erläutert derart zugeordnet ist, dass das jeweilige Ankerelement mittels Bestromens einer Spule eine Kraftwirkung zu einem der beiden Magnete des Magnetpaares erfährt. Indem die Anker derart symmetrisch an dem Spiegel vorgesehen sind, können aufgrund des beidseitigen Krafteintrags die Spiegel mit einer geringeren Dicke ausgeführt werden, wodurch wiederum höhere Positionierfrequenzen ermöglicht sind. Es kann auch vorgesehen sein, eine beliebige Anzahl von Ankerelementen derart an dem Spiegel zu befestigen, dass sie bezüglich einer senkrecht zu der Rotationsachse verlaufenden Ebene symmetrisch angeordnet sind. Zum Beispiel kann vorgesehen sein, dass die Scannervorrichtung mehrere Paare von Ankerelementen aufweist, wobei jedes der Paare zwei (bevorzugt identische) Ankerelemente aufweist, und wobei die beiden Ankerelemente eines jeden Paares derart an dem Spiegel befestigt sind, dass sie bezüglich einer senkrecht zu der Rotationsachse verlaufenden Ebene symmetrisch angeordnet sind.

Es kann insbesondere vorgesehen sein, dass mehrere Ankerelemente derart an dem Spiegel befestigt sind, dass die an dem Spiegel befestigten Ankerelemente sowohl bezüglich der Rotationsachse symmetrisch angeordnet sind als auch bezüglich einer senkrecht zu der Rotationsachse verlaufenden Ebene spiegelsymmetrisch angeordnet sind; wobei z.B. jedem dieser Ankerelemente ein Paar von Permanentmagneten wie oben erläutert derart zugeordnet sein kann, dass das jeweilige Ankerelement mittels Bestromens einer Spule eine Kraftwirkung zu einem der beiden Magnete des Magnetpaares erfährt.

Gemäß einer Ausführungsform weist die Scannervorrichtung eine konzentrisch zu der Rotationsachse angeordnete Spule auf. Mittels einer solchen Ausgestaltung ist insbesondere eine symmetrische Ausführung der Scannervorrichtung derart ermöglicht, dass mittels einer einzigen konzentrisch zu der Rotationsachse angeordneten Spule zwei oder mehr symmetrisch an dem Spiegel angeordnete Anker symmetrisch drehmomentbeaufschlagt werden.

Es kann auch vorgesehen sein, dass die Scannervorrichtung eine oder mehrere bezüglich der Rotationsachse exzentrisch angeordnete Spulen aufweist. Gemäß einer Ausführung weist die Scannervorrichtung (mindestens) zwei bezüglich der Rotationsachse symmetrisch angeordnete Spulen auf. Gemäß dieser Ausführung kann z.B. mittels jeder der beiden Spulen ein jeweiliges Ankerelement drehmomentbeaufschlagt werden. Allgemein kann vorgesehen sein, dass die Scannervorrichtung eine beliebige Anzahl von an dem Spiegel befestigten Ankern und genauso viele Permanentmagneten-Paare mit jeweils einem ersten und einem zweiten Magneten aufweist, wobei jedem der Ankerelemente ein jeweiliges Paar von Permanentmagneten wie oben erläutert derart zugeordnet ist, dass das Ankerelement mittels Bestromens einer Spule eine Kraftwirkung zu einem der beiden Magnete des Magnetpaares erfährt.

Es kann vorgesehen sein, dass der erste und/oder der zweite Permanentmagnet an seiner dem Anker bzw. dem Rotor zugewandten Seite einen Polschuh aufweist. Mittels dieser Polschuhe können der effektive Rotorradius und somit das Trägheitsmoment-Drehmoment-Verhältnis entsprechend der Antriebslast bei gleicher Spulenform angepasst werden.

Das Drehmoment, das bei Beaufschlagen der Spule mit einem elektrischen Strom über die Anker auf den Spiegel ausgeübt wird, kann mit der Winkelstellung des Spiegels variieren und z.B. nichtlinear von der Auslenkung des Spiegels aus seiner Neutrallage abhängen, wobei die Abhängigkeit des Drehmoments von dem Auslenkwinkel mittels einer Drehmoment-Winkel-Kennlinie beschreibbar ist. Die an den Magneten vorgesehenen Polschuhe können derart geformt sein, dass mittels der durch die Form der Polschuhe bewirkten Veränderung des Verlaufs des Magnetfeldes eine gemäß der Drehmoment-Winkel-Kennlinie auftretende Nichtlinearität zumindest teilweise oder auch vollständig ausgeglichen wird. Alternativ kann vorgesehen sein, die Polschuhe derart zu formen, dass mittels der durch die Form der Polschuhe bewirkten Veränderung des Magnetfeldes wie Winkelabhängigkeit des Drehmoments zumindest teilweise oder auch vollständig ausgeglichen wird (sodass das resultierende Drehmoment z.B. im Wesentlichen winkelunabhängig ist).

Diesbezüglich ist ein Polschuh ein Bauteil aus einem Material mit einer hohen Permeabilität (z.B. Eisen), das dazu dient, die magnetischen Feldlinien z.B. eines Permanentmagneten gemäß seiner Form zu führen und in einer definierten Form heraustreten zu lassen. Indem die Nichtlinearität der Drehmoment-Winkel-Kennlinie oder die Drehwinkelabhängigkeit des Drehmoments ausgeglichen wird, kann das Positionieren des Spiegels wesentlich vereinfacht werden.

Der Spiegel ist mittels eines Lagers bzw. einer Lagerung derart gelagert, dass er um die Rotationsachse schwenkbar ist, wobei der Spiegel ein- oder beidseitig bezüglich der Rotationsachse gelagert sein kann. Gemäß einer Ausführung ist der Spiegel an dem Eisenkern gelagert. Indem der Eisenkern sowohl als Antriebselement als auch als Widerlager zum Lagern des Spiegels dient, kann die kompakte Ausbildung der Scannervorrichtung zusätzlich unterstützt werden.

Indem das Drehmoment via die Anker auf den Spiegel aufgebracht wird, kann insbesondere die Drehmomentübertragung vom Rotorsegment des Antriebs auf den Spiegel wellenlos umgesetzt sein und der Spiegel wellenlos gelagert sein (d.h. zum Lagern des Spiegels ist keine drehmomentübertragende Welle erforderlich). Es kann z.B. vorgesehen sein, den Spiegel mittels einer Spiegelhalterung zu lagern, wobei die Halterung einen Halteabschnitt zum Halten des Spiegels und eine Achse bzw. einen Achsstumpf aufweist, wobei die Achse als umlaufende bzw. mitdrehende Achse ausgebildet und drehbar an dem Eisenkern gelagert ist. Alternativ kann vorgesehen sein, eine Achse in Form einer feststehenden, nicht mitdrehenden Achse auszubilden und an dem Eisenkern zu fixieren, wobei der Spiegel entweder unmittelbar oder mittels einer Halterung drehbar an der Achse gelagert ist. Jedoch hat die Achse eine reine Trag- bzw. Lagerfunktion, dient jedoch nicht der Drehmomentübertragung von dem Antrieb auf den Spiegel. Der Spiegel kann sozusagen durch die Abstützung an einem Lager selbst als Hebel zur Drehmomenterzeugung dienen.

Gemäß einer Ausführung ist der Spiegel mittels eines Festkörpergelenks um die Rotationsachse drehbar gelagert, wobei das Festkörpergelenk vorzugsweise als Kreuzfedergelenk ausgeführt ist. Gegenüber herkömmlichen Galvanometerscannern mit Kugellagern haben Festkörpergelenke eine deutlich höhere Lebensdauer und eine höhere Präzision bei der Bewegung und Positionierung des Spiegels. Ein Festkörpergelenk ermöglicht eine Relativbewegung zwischen zwei Starrkörperbereichen mittels elastischer Biegung, sodass mittels des Festkörpergelenks ein der Auslenkung des Spiegels aus seiner Neutral- bzw. Nulllage entgegenwirkendes Rückstellmoment bereitgestellt werden kann.

Bei Vorliegen der Neutrallage des Spiegels bei mittig zwischen den beiden Magneten angeordnetem Anker liegt ein bistabiles Verhalten des Spiegels vor, wobei eine kleine Auslenkung des Spiegels in Richtung zu einem der beiden Magneten zu einer weiteren Auslenkung in diese Richtung führt. Das Festkörpergelenk kann derart ausgebildet sein, dass mittels des Festkörpergelenks das bistabile Verhalten im stromlosen Zustand für kleine Stellwinkel kompensiert wird und der Spiegel mittels des von dem Festkörpergelenk bereitgestellten Rückstellmoments in seine vorgegebene Neutrallage gebracht wird, wenn kein Strom an der Spule anliegt.

Zudem kann vorgesehen sein, das Festkörpergelenk derart auszubilden, dass mittels der von dem Festkörpergelenk bereitgestellten Rückstellkraft eine gemäß der Drehmoment-Winkel-Kennlinie (die die Variation des Drehmoments, das mittels der Spule über die Anker auf den Spiegel ausgeübt wird, in Abhängigkeit von dem Auslenkwinkel beschreibt) auftretende Nichtlinearität zumindest teilweise (oder auch vollständig) ausgeglichen wird.

Die Erfindung wird nachfolgend anhand von Ausführungsbeispielen mit Bezug auf die Figuren veranschaulicht, wobei gleiche oder ähnliche Merkmale mit gleichen Bezugszeichen versehen sind; hierbei zeigen schematisch:
- Figur 1: eine isometrische Ansicht eines optischen Scanners gemäß einer ersten Ausführungsform mit einem einzigen Anker;
- Figur 2: eine Draufsicht des Scanners gemäß Figur 1 ohne Spiegel und Spiegelhalter im stromlosen Fall;
- Figur 3: eine seitliche Schnittdarstellung des Scanners gemäß Figur 1 bei Vorliegen eines Stromflusses durch die Spule;
- Figur 4: eine Draufsicht des Scanners gemäß Figur 1 ohne Spiegel und Spiegelhalter bei Vorliegen eines Stromflusses durch die Spule;
- Figur 5: eine isometrische Ansicht eines optischen Scanners gemäß einer zweiten Ausführungsform mit zwei Ankern und einer gemeinsamen Spule;
- Figur 6: eine seitliche Schnittdarstellung des Scanners gemäß Figur 2;
- Figur 7: eine isometrische Ansicht eines optischen Scanners gemäß einer dritten Ausführungsform mit zwei Ankern und zwei Spulen;
- Figur 8: eine seitliche Schnittdarstellung des Scanners gemäß Figur 7;
- Figur 9: eine isometrische Ansicht eines optischen Scanners gemäß einer vierten Ausführungsform mit zwei an einer Spiegelfase angeordneten Ankern;
- Figur 10: eine seitliche Schnittdarstellung des Scanners gemäß Figur 9;
- Figur 11: eine isometrische Ansicht eines optischen Scanners gemäß einer fünften Ausführungsform mit zwei Festkörpergelenken als Lager.

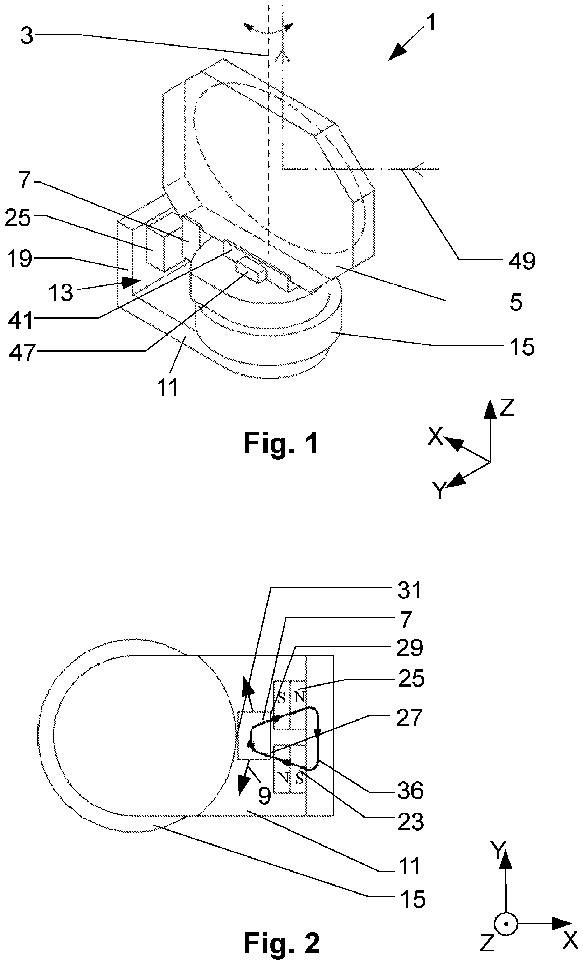

Gemäß den Figuren 1 bis 4 weist eine Scannervorrichtung bzw. ein optischer Scanner 1 gemäß einer ersten Ausführungsform einen um eine Schwenk- bzw. Rotationsachse 3 schwenkbar angeordneten Spiegel 5 auf. An dem Spiegel 5 ist in einem radialen Abstand zu der Rotationsachse 3 ein Anker 7 aus einem weichmagnetischen Material befestigt. Bei einer Drehung des Spiegels 5 um die Rotationsachse 3 wird der Anker 7 somit entlang eines Kreisbahnabschnittes bewegt (in Figur 2 veranschaulicht durch den Doppelpfeil 9).

Der Scanner 1 weist einen Eisenkern 11 mit einem Luftspalt 13 auf. Der Scanner 1 weist zudem eine Spule 15 auf, die um einen Abschnitt 17 des Eisenkerns (auch als Spulenkern-Abschnitt 17 bezeichnet) verlaufend angeordnet ist. Der Luftspalt 13 ist zwischen einem ersten Endabschnitt 19 des Eisenkerns 11, der als magnetischer Rückschluss fungiert, und einem zweiten Endabschnitt 21 des Eisenkerns 11, der als Polschuh fungiert, ausgebildet. Der Eisenkern 11 besteht somit aus dem ersten 19 und dem zweiten 21 Endabschnitt und dem dazwischen angeordneten Spulenkernabschnitt 17, wobei diese drei Abschnitte entweder jeweils als separates Bauteil ausgebildet sein können oder zwei oder alle dieser Abschnitte integral als ein einziges Bauteil ausgebildet sein können. Bei der Ausführung gemäß den Figuren 1 bis 4 sind der Eisenkern 11 und die Spule 15 insbesondere derart ausgebildet, dass die Spule 15 konzentrisch zu der Rotationsachse 3 angeordnet ist.

Der Scanner 1 weist zudem einen ersten Permanentmagneten 23 und einen zweiten Permanentmagneten 25 auf, die in dem Luftspalt 13 angeordnet sind. Die beiden Magnete 23, 25 sind kontaktierend an dem Rückschluss 19 des Eisenkerns 11 angeordnet. Der Anker 7 ist innerhalb des Luftspalts 13 zwischen dem als Polschuh mit einem konstanten Radius ausgebildeten zweiten Eisenkern-Endabschnitt 21 und den beiden Magneten 23, 25 derart angeordnet, dass in dem Luftspalt 13 zwischen dem ersten Magneten 23 und dem Anker 7 ein erster Arbeitsluftspalt 27, zwischen dem zweiten Magneten 25 und dem Anker 7 ein zweiter Arbeitsluftspalt 29, und zwischen dem ankerseitigen zweiten Eisenkern-Endabschnitt 21 und dem Anker 7 ein Segmentierungsluftspalt 31 ausgebildet sind.

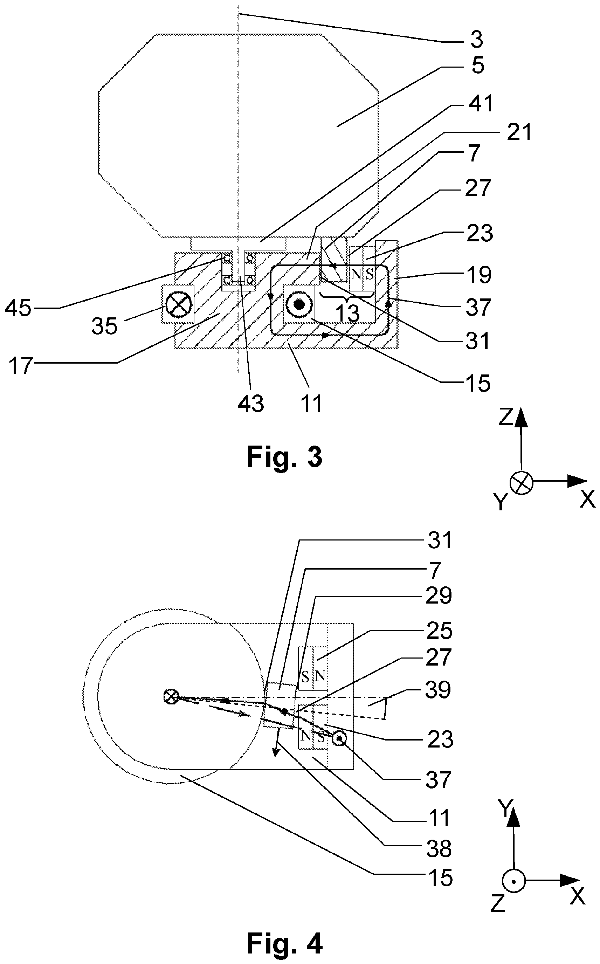

Bei Beaufschlagen der Spule 15 mit einem elektrischen Strom wird in dem Eisenkern 11 und in dem Luftspalt 13 ein Magnetfeld induziert, wobei die Richtung des Magnetfeldes abhängig von der Stromrichtung des Spulenstroms ist. Figur 3 veranschaulicht die Scannervorrichtung 1 bei Beaufschlagen der Spule 15 mit einem Strom einer ersten Stromrichtung 35, wobei von der Spule 15 ein Magnetfeld induziert wird (und wobei Figur 3 einen durch den ersten Magneten 23 verlaufenden Schnitt parallel zur xz-Ebene zeigt). Bei Beaufschlagen der Spule 15 mit der ersten Stromrichtung 35 wird in dem Luftspalt 13 ein in einer ersten Spulenfeld-Richtung verlaufendes Magnetfeld hervorgerufen, wobei gemäß Figur 3 die erste Spulenfeld-Richtung die negative x-Richtung des in den Figuren veranschaulichten xyz-Koordinatensystems ist. Bei Beaufschlagen der Spule 15 mit einem Strom einer der ersten Stromrichtung 35 entgegengerichteten, zweiten Stromrichtung (nicht dargestellt) wird analog in dem Luftspalt 13 ein in einer zweiten Spulenfeld-Richtung verlaufendes Magnetfeld hervorgerufen, wobei die zweite Spulenfeld-Richtung die positive x-Richtung des xyz-Koordinatensystems ist. Hier wird unter dem Begriff Spulenfeld-Richtung die Richtung des Magnetfeldes bezeichnet, das mittels der Spule 15 in dem Luftspalt 13 hervorgerufen wird.

Die Magnetisierungsrichtung der Magnete 23, 25 ist in den Figuren durch die Angabe des Nordpols N und des Südpols S des jeweiligen Magneten gekennzeichnet. Der erste Magnet 23 ist derart angeordnet, dass seine Magnetisierung in die negative x-Richtung weist und somit mit der ersten Spulenfeld-Richtung identisch ist. Der zweite Magnet 25 ist derart angeordnet, dass seine Magnetisierung in die positive x-Richtung weist und somit mit der zweiten Spulenfeld-Richtung identisch ist.

Die Magnetisierung des ersten 23 und des zweiten 25 Magneten sind betragsmäßig gleich groß. Der erste 23 und der zweite 25 Magnet sind insbesondere derart angeordnet, dass ihre Magnetisierungen jeweils senkrecht und im Wesentlichen radial zu der Rotationsachse 3 verlaufen.

Der Anker 7 ist an einem in Richtung zu dem Eisenkern 11 gelegenen Endabschnitt des Spiegels 5 angeordnet. Der Eisenkern 11 ist derart ausgebildet und angeordnet, dass der von dem Anker 7 bei einer Schwenkbewegung des Spiegels 5 überstrichene Kreisbahnabschnitt innerhalb des Luftspalts 13 verläuft. Bezüglich der Rotationsachse 3 ist der erste Magnet 23 an einer ersten Drehwinkelposition und der zweite Magnet 25 an einer zweiten Drehwinkelposition angeordnet.

Figur 2 veranschaulicht eine Draufsicht des Scanners 1 im stromlosen Fall, wobei zur besseren Übersichtlichkeit der Spiegel 5 weggelassen ist. Befindet sich der Anker 7 - wie in Figur 2 veranschaulicht - in seiner Neutrallage, d.h. in einer Drehstellung mittig zwischen den beiden Magneten 23, 25 und ist der Strom in der Spule gleich Null, so entsteht auf Grund der Vormagnetisierung der Permanentmagneten 23, 25 ein Vormagnetisierungskreis 36.

Wird die Spule 15 von einem Strom durchflossen, bildet sich in Abhängigkeit von der Stromrichtung des Spulenstroms ein Antriebsmagnetkreis 37, wobei sich die von den Permanentmagneten 23, 25 hervorgerufenen Magnetfelder und das von der Spule 15 hervorgerufenen Magnetfeld überlagern. Die Figuren 3 und 4 veranschaulichen den Scanner 1 bei Vorliegen der ersten Stromrichtung 35. Bei Vorliegen der ersten Stromrichtung 35 ist das von der Spule 15 in dem Luftspalt 13 erzeugte Magnetfeld der Magnetisierung des ersten Magneten 23 gleichgerichtet und der Magnetisierung des zweiten Magneten 25 entgegengerichtet, sodass das Magnetfeld in dem ersten Arbeitsluftspalt 27 verstärkt und in dem zweiten Arbeitsluftspalt 29 abgeschwächt wird. Analog ist bei Vorliegen der zweiten Stromrichtung (nicht dargestellt) das von der Spule 15 in dem Luftspalt 13 erzeugte Magnetfeld der Magnetisierung des ersten Magneten 23 entgegengerichtet und der Magnetisierung des zweiten Magneten 25 gleichgerichtet, sodass das Magnetfeld in dem ersten Arbeitsluftspalt 27 abgeschwächt und in dem zweiten Arbeitsluftspalt 29 verstärkt wird. Der Hauptteil des magnetischen Flusses des Antriebsmagnetkreises 37 verläuft somit jeweils über denjenigen Magneten, dessen Magnetisierungsrichtung mit der Richtung des von der Spule 15 in dem Luftspalt 13 erzeugten Magnetfeldes übereinstimmt.

Bei einer Auslenkung des Ankers 7 aus seiner Neutrallage hin zu einem der beiden Arbeitsluftspalte 27, 29 vergrößert sich die Permeabilität dieses Arbeitsluftspalts, wohingegen sich die Permeabilität des jeweils anderen Arbeitsluftspalts verkleinert. Der Anker 7 wird bei Bestromung der Spule 15 aufgrund der resultierenden Reluktanzkraft stets in Richtung zu dem Gebiet mit dem stärkeren Magnetfeld bzw. der größeren magnetischen Flussdichte hin bewegt, sodass mittels Einstellens der in der Spule 15 vorliegenden Stromrichtung und/oder Stromstärke der Spiegel 5 in eine vorgegebene Drehwinkelstellung gebracht werden kann.

Gemäß den Figuren 3 und 4 ist die Spule 15 mit der ersten Stromrichtung 35 beaufschlagt, sodass mittels der auf den Anker 7 wirkende Reluktanzkraft mit dem radialen Kraftvektor 38 der Anker 7 unter entsprechender Drehung des Spiegels 5 um einen Auslenkwinkel 39 zu dem ersten Magneten 23 bzw. dem ersten Arbeitsspalt 27 hin bewegt ist. Wird die Spule 15 mit der zweiten Stromrichtung beaufschlagt, so wird der Anker 7 aufgrund der nunmehr resultierenden Reluktanzkraft in Richtung zu dem zweiten Magneten 25 bzw. dem zweiten Arbeitsspalt 29 hin bewegt.

Der Scanner 1 gemäß den Figuren 1 bis 4 ist mittels einer Spiegelhalterung 41 um die Rotationsachse 3 schwenkbar an dem Eisenkern 11 gelagert. Die Spiegelhalterung 41 weist einen Halteabschnitt zum Halten des Spiegels 5 und einen Achsstumpf 43 zum Lagern der Spiegelhalterung 41 auf. Der Achsstumpf 43 ist mittels eines Lagers 45 drehbar an dem Eisenkern 11 gelagert, wobei das Lager 45 z.B. als Wälz- oder Gleitlager ausgeführt sein kann. Der Spiegel 5 ist somit insbesondere wellenlos, d.h. ohne eine drehmomentübertragende Welle, ausgeführt, der Achsstumpf 43 dient lediglich der Lagerung des Spiegels 5. Der Scanner 1 weist ferner einen Positionsdetektor 47 zum Erfassen der Drehwinkelposition des Spiegels 5 auf, wobei der Positionsdetektor 47 als Beispiel an der Spiegelhalterung 41 angebracht ist. Zur Veranschaulichung ist in Figur 1 ein von dem Spiegel 5 reflektierter Lichtstrahl 49 in Form eines Laserstrahls dargestellt.

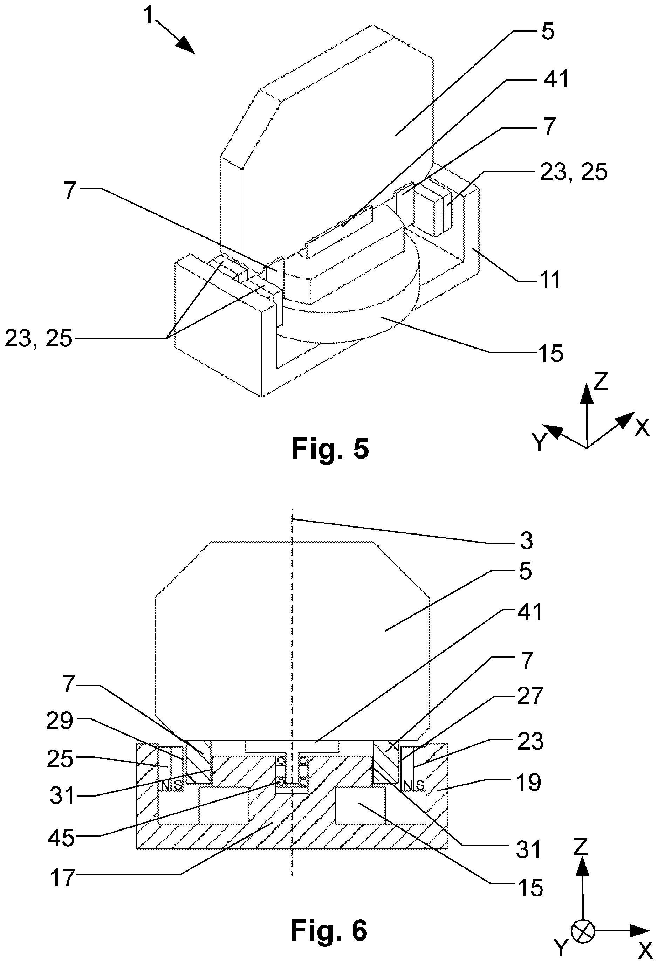

Die Figuren 5 bis 11 veranschaulichen optische Scanner gemäß weiteren Ausführungsformen, wobei deren Funktionsweise analog zu der mit Bezug auf die Figuren 1 bis 4 beschriebenen Funktionsweise ist und daher im Folgenden nicht nochmals erläutert wird.

Die Figuren 5 und 6 veranschaulichen einen optischen Scanner 1 gemäß einer zweiten Ausführungsform, der im Unterschied zu der ersten Ausführungsform zwei identische Ankerelemente 7 aufweist, die derart in einem radialen Abstand zu der Rotationsachse 3 an dem Spiegel 5 befestigt sind, dass sie bezüglich der Rotationsachse 3 symmetrisch angeordnet sind. Jedem der beiden Anker 7 ist ein Paar von Permanentmagneten mit einem ersten 23 und einem zweiten Permanentmagneten 25 zugeordnet, wobei gemäß der zweiten Ausführungsform das zum Erzeugen des Drehmoments dienende Spulen-Magnetfeld mittels einer einzigen, konzentrisch zu der Rotationsachse 3 angeordneten gemeinsamen Spule 15 erzeugt wird. Figur 6 veranschaulicht einen Schnitt parallel zur xz-Ebene.

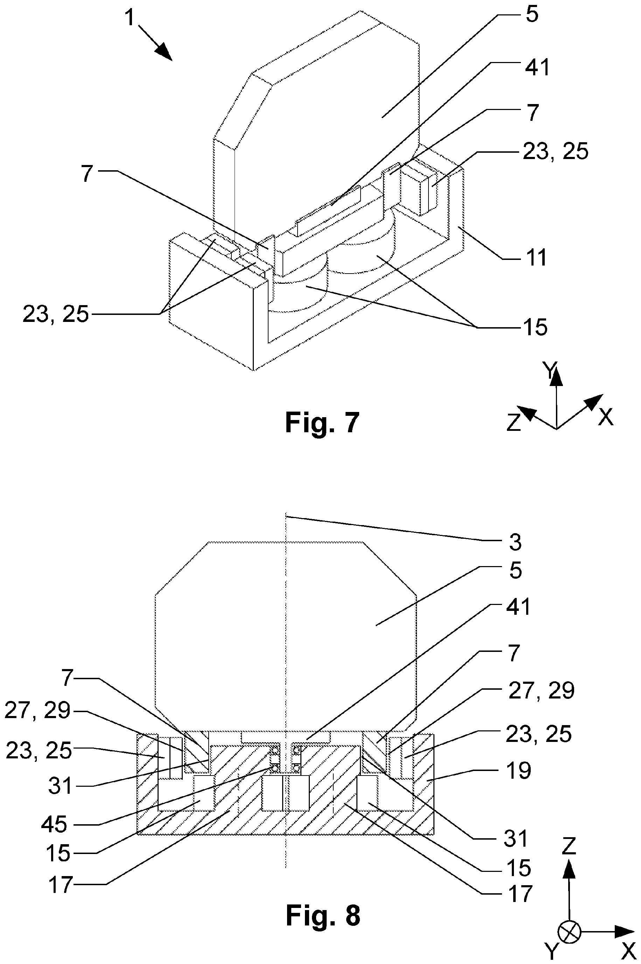

Die Figuren 7 und 8 veranschaulichen einen optischen Scanner 1 gemäß einer dritten Ausführungsform, der im Unterschied zu der ersten Ausführungsform zwei identische, bezüglich der Rotationsachse 3 symmetrisch an dem Spiegel 5 angeordnete Anker 7 und zwei bezüglich der Rotationsachse 3 symmetrisch (und nicht konzentrisch) angeordnete Spulen 15 aufweist. Jedem der beiden Anker 7 ist ein Paar von Permanentmagneten 23, 25 zugeordnet.

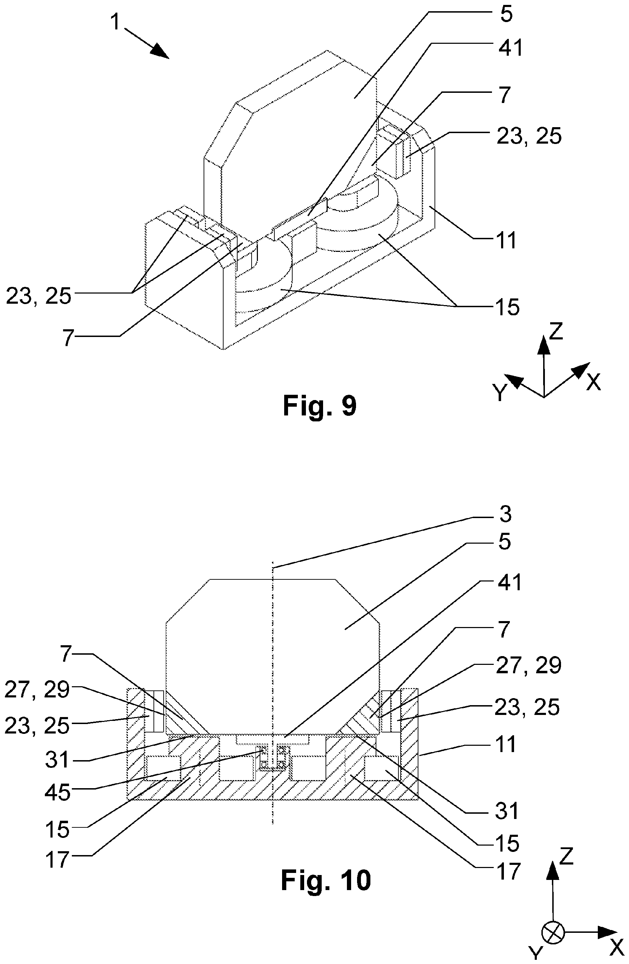

Die Figuren 9 und 10 veranschaulichen einen optischen Scanner 1 gemäß einer vierten Ausführungsform, wobei im Unterschied zu der ersten Ausführungsform zwei Anker 7 an jeweils einer Fase (d.h. abgeschrägten Fläche) des Spiegels 5 befestigt sind. Jeder der Anker 7 ist mit einem dreieckigen Querschnitt ausgebildet. Gemäß der vierten Ausführungsform sind die Segmentierungsspalte 31 somit senkrecht zur Rotationsachse 3 verlaufend angeordnet.

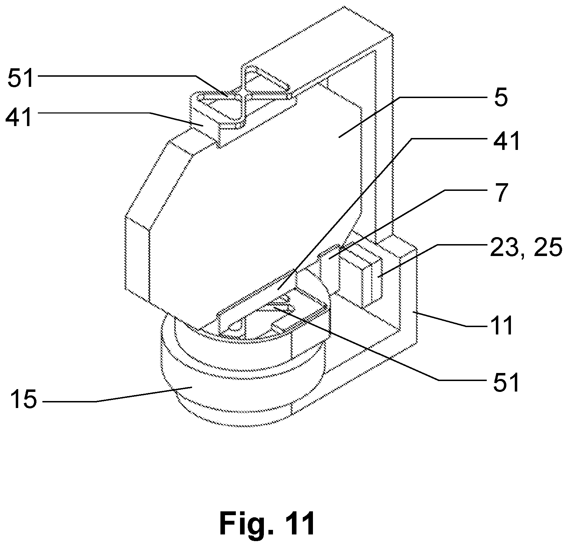

Figur 11 veranschaulicht einen optischen Scanner 1 gemäß einer fünften Ausführungsform, wobei der Spiegel 1 bezüglich der Rotationsachse 3 beidseitig mittels eines Festkörpergelenks 51 um die Rotationsachse 3 schwenkbar gelagert ist. Die Festkörpergelenke 51 sind derart ausgebildet, dass der Spiegel 5 im stromlosen Fall (d.h. wenn kein Strom in der Spule vorliegt) mittels des von den Festkörpergelenken 51 bereitgestellten Rückstellmoments stabil in seiner Neutrallage, d.h. in einer Drehstellung mittig zwischen den beiden Permanentmagneten 23, 25, gehalten wird. D.h., die Festkörpergelenke 51 sind derart ausgebildet, dass die von ihnen bereitgestellte Rückstellkraft für kleine Auslenkwinkel die Anziehungskraft der Permanentmagneten bei außermittiger Stellung des Ankers derart kompensiert, dass der Anker 7 im stromlosen Zustand in seine Neutrallage zurückgeführt bzw. in seiner Neutrallage gehalten wird. Die Festkörpergelenke 51 sind zudem derart ausgebildet, dass mittels der von ihnen bereitgestellten Rückstellkraft Nichtlinearitäten der Drehmoment-Winkel-Kennlinie kompensiert werden.

### Liste der verwendeten Bezugszeichen

- 1: Scannervorrichtung / optischer Scanner
- 3: Rotationsachse
- 5: Spiegel
- 7: Ankerelement / Anker
- 9: Schwenkbewegung / von Anker überstrichener Kreisbahnabschnitt
- 11: Eisenkern
- 13: Luftspalt
- 15: Spule
- 17: Spulenkern-Abschnitt des Eisenkerns
- 19: erster Eisenkern-Endabschnitt / magnetischer Rückschluss
- 21: zweiter Eisenkern-Endabschnitt / Polschuhabschnitt
- 23: erster Permanentmagnet
- 25: zweiter Permanentmagnet
- 27: erster Arbeitsluftspalt
- 29: zweiter Arbeitsluftspalt
- 31: Segmentierungsluftspalt
- 35: erste Stromrichtung
- 36: Vormagnetisierungskreis
- 37: Antriebskreis
- 38: radialer Kraftvektor
- 39: Auslenkwinkel
- 41: Spiegelhalterung
- 43: Achsstumpf
- 45: Lager
- 47: Positionsdetektor
- 49: Lichtstrahl / Laserstrahl
- 51: Festkörpergelenk / Kreuzfedergelenk

## Patentansprüche

1. Scannervorrichtung (1), aufweisend:
- einen um eine Rotationsachse (3) schwenkbar angeordneten Spiegel (5), wobei in einem radialen Abstand zu der Rotationsachse ein Ankerelement (7) aus einem weichmagnetischen Material an dem Spiegel (5) befestigt ist, sodass bei einer Drehung des Spiegels das Ankerelement einen Kreisbahnabschnitt (9) überstreicht,
- einen Eisenkern (11) mit einem Luftspalt (13) und eine Spule (15), die um einen Abschnitt (17) des Eisenkerns verlaufend angeordnet ist, sodass in dem Luftspalt bei Beaufschlagen der Spule mit einem elektrischen Strom einer ersten Stromrichtung (35) ein Magnetfeld mit einer ersten Spulenfeld-Richtung und bei Beaufschlagen der Spule mit einem elektrischen Strom einer der ersten entgegengerichteten, zweiten Stromrichtung ein Magnetfeld mit einer der ersten entgegengerichteten, zweiten Spulenfeld-Richtung hervorgerufen wird,
- einen ersten (23) und einen zweiten (25) Permanentmagneten, die derart in dem Luftspalt (13) angeordnet sind, dass die Magnetisierung des ersten Permanentmagneten einen in Richtung der ersten Spulenfeld-Richtung und die Magnetisierung des zweiten Permanentmagneten einen in Richtung der zweiten Spulenfeld-Richtung weisenden Anteil aufweist,
- wobei der Eisenkern (11) derart ausgebildet und angeordnet ist, dass der von dem Ankerelement (7) überstrichene Kreisbahnabschnitt (9) innerhalb des Luftspalts verläuft, wobei der erste Permanentmagnet (23) an einer ersten Drehwinkelposition und der zweite Permanentmagnet (25) an einer zweiten Drehwinkelposition bezüglich der Rotationsachse innerhalb des Luftspalts (13) angeordnet ist.

2. Scannervorrichtung nach Anspruch 1, wobei der erste (23) und der zweite (25) Permanentmagnet derart angeordnet sind, dass die Magnetisierung des ersten und des zweiten Permanentmagneten senkrecht zu der Rotationsachse (3) verlaufen.

3. Scannervorrichtung nach Anspruch 1 oder 2, wobei der Spiegel (5) ein angefaster Spiegel ist und das Ankerelement (7) an einer Fase des Spiegels angeordnet ist.

4. Scannervorrichtung nach einem der Ansprüche 1 bis 3, aufweisend mindestens ein Ankerelement-Paar mit zwei Ankerelementen (7), die derart an dem Spiegel (5) befestigt sind, dass sie bezüglich der Rotationsachse (3) symmetrisch angeordnet sind.

5. Scannervorrichtung nach einem der Ansprüche 1 bis 4, wobei das Drehmoment, das mittels des von der Spule (15) erzeugten Magnetfeldes auf den Spiegel (5) ausgeübt wird, gemäß einer Drehmoment-Winkel-Kennlinie von der Winkelstellung des Spiegels abhängt, und wobei der erste (23) und/oder der zweite (25) Permanentmagnet einen Polschuh aufweist, der derart geformt ist, dass mittels der durch die Form des Polschuhs bewirkten Veränderung des Verlaufs des Magnetfeldes eine gemäß der Drehmoment-Winkel-Kennlinie auftretende Nichtlinearität zumindest teilweise ausgeglichen wird.

6. Scannervorrichtung nach einem der Ansprüche 1 bis 5, wobei der Spiegel (5) an dem Eisenkern (11) derart gelagert ist, dass er um die Rotationsachse (3) schwenkbar ist.

7. Scannervorrichtung nach einem der Ansprüche 1 bis 6, wobei der Spiegel (5) mittels eines Festkörpergelenks (51) derart gelagert ist, dass er um die Rotationsachse (3) schwenkbar ist.

8. Scannervorrichtung nach Anspruch 7, wobei das Festkörpergelenk (51) derart ausgebildet ist, dass der Spiegel (5) mittels der von dem Festkörpergelenk bereitgestellten Rückstellkraft in eine vorgegebene Neutrallage gebracht wird, wenn kein Strom an der Spule (15) anliegt.

9. Scannervorrichtung nach Anspruch 7 oder 8, wobei das Drehmoment, das mittels des von der Spule (15) erzeugten Magnetfeldes auf den Spiegel (5) ausgeübt wird, gemäß einer Drehmoment-Winkel-Kennlinie von der Winkelstellung des Spiegels (5) abhängt, und wobei das Festkörpergelenk (51) derart ausgebildet ist, dass mittels der von dem Festkörpergelenk bereitgestellten Rückstellkraft eine gemäß der Drehmoment-Winkel-Kennlinie auftretende Nichtlinearität zumindest teilweise ausgeglichen wird.

10. Scannervorrichtung nach einem der Ansprüche 1 bis 9, wobei der Spiegel (5) wellenlos gelagert ist.

11. Scannervorrichtung nach einem der Ansprüche 1 bis 10, wobei die Spule (15) konzentrisch zu der Rotationsachse (3) angeordnet ist.

12. Scannervorrichtung nach einem der Ansprüche 1 bis 11, aufweisend mindestens zwei bezüglich der Rotationsachse (3) symmetrisch angeordnete Spulen.

13. Scannervorrichtung nach einem der Ansprüche 1 bis 12, aufweisend mindestens ein Ankerelement-Paar mit zwei Ankerelementen, die derart an dem Spiegel (5) befestigt sind, dass sie bezüglich einer senkrecht zu der Rotationsachse (3) verlaufenden Ebene symmetrisch angeordnet sind.

## Claims

1. A scanner device (1), comprising:
- a mirror (5) mounted pivotally about an axis of rotation (3), wherein an armature element (7) made of a soft magnetic material is secured to the mirror (5) at a radial distance from the axis of rotation, such that the armature element sweeps over a circular path section (9) upon rotation of the mirror,
- an iron core (11) with an air gap (13) and a coil (15), which is arranged running around a portion (17) of the iron core so that a magnetic field having a first coil field direction is induced in the air gap when an electrical current having a first current direction (35) is applied to the coil and a magnetic field having a second coil field direction, opposite the first, is induced in the air gap when an electrical current having a second current direction, directed opposite to the first, is applied to the coil,
- a first permanent magnet (23) and a second permanent magnet (25), which are arranged in the air gap (13) in such a way that the magnetisation of the first permanent magnet has a portion pointing in the direction of the first coil field direction and the magnetisation of the second permanent magnet has a portion pointing in the direction of the second coil field direction,
- wherein the iron core (11) is designed and arranged in such a way that the circular path section (9) swept over by the armature element (7) runs within the air gap, wherein the first permanent magnet (23) is arranged within the air gap (13) at a first rotational angle position and the second permanent magnet (25) is arranged within the air gap (13) at a second rotational angle position with respect to the axis of rotation.

2. The scanner device according to claim 1, wherein the first permanent magnet (23) and the second permanent magnet (25) are arranged in such a way that the magnetisation of the first and the second permanent magnet run at right angles to the axis of rotation (3).

3. The scanner device according to claim 1 or 2, wherein the mirror (5) is a chamfered mirror and the armature element (7) is arranged on a chamfer of the mirror.

4. The scanner device according to any one of claims 1 to 3, having at least one pair of armature elements, each pair comprising two armature elements (7) which are secured to a mirror (5) in such a way that they are arranged symmetrically with respect to the axis of rotation (3).

5. The scanner device according to any one of claims 1 to 4, wherein the torque that is exerted on the mirror (5) by means of the magnetic field generated by the coil (15) is dependent on the angular position of the mirror according to a torque-angle characteristic curve, and wherein the first permanent magnet (23) and/or the second permanent magnet (25) have/has a pole shoe, which is shaped in such a way that a non-linearity occurring in accordance with the torque-angle characteristic curve is at least partly compensated for by means of the change to the course of the magnetic field caused by the shape of the pole shoe.

6. The scanner device according to any one of claims 1 to 5, wherein the mirror (5) is mounted on the iron core (11) in such a way that it can be pivoted about the axis of rotation (3).

7. The scanner device according to any one of claims 1 to 6, wherein the mirror (5) is mounted by means of a flexure hinge (51) in such a way that it can be pivoted about the axis of rotation.

8. The scanner device according to claim 7, wherein the flexure hinge (51) is designed in such a way that the mirror (5) is brought by means of the restoring force provided by the flexure hinge into a predefined neutral position when no current is applied to the coil (15).

9. The scanner device according to claim 7 or 8, wherein the torque exerted on the mirror (5) by means of the magnetic field generated by the coil (15) is dependent on the angular position of the mirror (5) in accordance with a torque-angle characteristic curve, and wherein the flexure hinge (51) is formed in such a way that a non-linearity occurring in accordance with the torque-angle characteristic curve is compensated for at least in part by means of the restoring force provided by the flexure hinge.

10. The scanner device according to any one of claims 1 to 9, wherein the mirror (5) is mounted shaftless.

11. The scanner device according to any one of claims 1 to 10, wherein the coil (15) is arranged concentrically to the axis of rotation (3).

12. The scanner device according to any one of claims 1 to 11, having at least two coils arranged symmetrically with respect to the axis of rotation (3).

13. The scanner device according to any one of claims 1 to 12, having at least one pair of armature elements, each pair comprising two armature elements which are secured to the mirror (5) in such a way that they are arranged symmetrically with respect to a plane running at right angles to the axis of rotation (3).

## Revendications

1. Dispositif scanner (1), présentant :
- un miroir (5) disposé en pouvant pivoter autour d'un axe de rotation (3), où un élément d'ancrage (7) constitué d'un matériau magnétique doux est fixé à une distance radiale par rapport à l'axe de rotation sur le miroir (5), de sorte que, lors d'une rotation du miroir, l'élément d'ancrage balaye une section de trajectoire circulaire (9),
- un noyau en fer (11) avec un entrefer (13) et une bobine (15), qui est disposée s'étendant autour d'une section (17) du noyau en fer, de sorte que, dans l'entrefer, lors d'une application de courant électrique dans la bobine d'un premier sens du courant (35), un champ magnétique avec une première orientation du champ de la bobine est créé, et lors de l'application d'un courant électrique avec un deuxième sens de courant orienté inversement par rapport au premier à la bobine, un champ magnétique avec une deuxième orientation du champ de la bobine orienté en sens inverse par rapport au premier est créé,
- un premier (23) et un deuxième (25) aimants permanents, qui sont disposés de telle manière dans l'entrefer (13) que la magnétisation du premier aimant permanent présente une composante d'orientation selon le premier champ de bobine et la magnétisation des deuxièmes aimants permanents présente une composante d'orientation selon le deuxième champ de bobine,
- où le noyau en fer (11) est conçu et disposé de telle manière que la section de trajectoire circulaire (9) balayée par l'élément d'ancrage (7) s'étend à l'intérieur de l'entrefer, le premier aimant permanent (23) étant disposé à une première position d'angle de rotation et le deuxième aimant permanent (25) étant disposé à une deuxième position d'angle de rotation par rapport à un axe de rotation à l'intérieur de l'entrefer (13).

2. Dispositif scanner selon la revendication 1, dans lequel le premier (23) et le deuxième (25) aimants permanents sont disposés de telle manière que les magnétisations des premier et deuxième aimants permanents s'étendent perpendiculairement par rapport à l'axe de rotation (3).

3. Dispositif scanner selon la revendication 1 ou 2, dans lequel le miroir (5) est un miroir biseauté et l'élément d'ancrage (7) est disposé sur une partie biseautée du miroir.

4. Dispositif scanner selon l'une des revendications 1 à 3, présentant au moins une paire d'éléments d'ancrage avec deux éléments d'ancrage (7), qui sont fixés sur le miroir (5) de telle manière qu'ils sont disposés symétriquement par rapport à l'axe de rotation (3.

5. Dispositif scanner selon l'une des revendications 1 à 4, dans lequel le couple de rotation qui est exercé au centre du champ magnétique généré par la bobine (15) sur le miroir (5) dépend de la position angulaire du miroir selon une courbe caractéristique couple - angle, et dans lequel le premier (23) et/ou le deuxième (25) aimants permanents présente(nt) une pièce polaire, qui est formée de telle sorte qu'au moyen de la modification de l'étendue du champ magnétique provoquée par la forme de la pièce polaire, une non linéarité amenée selon la courbe caractéristique couple - angle est au moins partiellement compensée.

6. Dispositif scanner selon l'une des revendications 1 à 5, dans lequel le miroir (5) est logé sur le noyau en fer (11) de telle manière qu'il peut pivoter autour de l'axe de rotation (3).

7. Dispositif scanner selon l'une des revendications 1 à 6, dans lequel le miroir (5) est logé au moyen d'une articulation à corps solide (51) de telle manière qu'il peut pivoter autour de l'axe de rotation (3).

8. Dispositif scanner selon la revendication 7, dans lequel l'articulation à corps solide (51) est conçue de telle manière que le miroir (5) est porté dans une position neutre prédéfinie au moyen de la force de rappel apportée par l'articulation à corps solide lorsqu'il n'y a pas de courant sur la bobine (15).

9. Dispositif scanner selon la revendication 7 ou 8, dans lequel le couple de rotation qui s'exerce sur le miroir (5) au moyen du champ magnétique généré par la bobine (15) dépend de la position angulaire du miroir (5) selon une courbe caractéristique couple - angle, et où l'articulation à corps solide (51) est conçue de telle manière qu'une non linéarité amenée au moyen de la force de rappel provoquée par l'articulation à corps solide selon la courbe caractéristique couple - angle est au moins partiellement compensée.

10. Dispositif scanner selon l'une des revendications 1 à 9, dans lequel le miroir (5) est logé sans axe.

11. Dispositif scanner selon l'une des revendications 1 à 10, dans lequel la bobine (15) est disposé de manière concentrique par rapport à l'axe de rotation (3).

12. Dispositif scanner selon l'une des revendications 1 à 11, présentant au moins deux bobines disposées symétriquement par rapport à l'axe de rotation (3).

13. Dispositif scanner selon l'une des revendications 1 à 12, présentant au moins une paire d'éléments d'ancrage avec deux éléments d'ancrage qui sont fixés sur le miroir (5) de telle manière qu'ils sont disposés symétriquement dans un plan s'étendant perpendiculairement par rapport à l'axe de rotation (3).
